(19) Europäisches Patentamt
European Patent Office
Office européen des brevets

(11) **EP 4 557 569 A1**

(12) **EUROPEAN PATENT APPLICATION**
published in accordance with Art. 153(4) EPC

(43) Date of publication:
**21.05.2025 Bulletin 2025/21**

(21) Application number: **24849479.1**

(22) Date of filing: **25.07.2024**

(51) International Patent Classification (IPC):
*H02J 7/00* (2006.01)          *H02J 3/00* (2006.01)
*H02J 3/32* (2006.01)          *H02J 3/38* (2006.01)
*B60L 53/53* (2019.01)        *B60L 55/00* (2019.01)

(52) Cooperative Patent Classification (CPC):
**B60L 53/53; B60L 55/00; G06Q 50/06; H02J 3/00;
H02J 3/32; H02J 3/38; H02J 7/00**

(86) International application number:
**PCT/KR2024/010808**

(87) International publication number:
**WO 2025/028910 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.08.2023 KR 20230101159**

(71) Applicant: **LG Energy Solution, Ltd.
Seoul 07335 (KR)**

(72) Inventor: **KIM, Daesoo
Daejeon 34122 (KR)**

(74) Representative: **BCKIP Part mbB
MK1
Landsbergerstraße 98, 3.Stock
80339 München (DE)**

(54) **ENERGY MANAGEMENT DEVICE AND ENERGY MANAGEMENT METHOD**

(57)    An energy management device that interworks with an electric power grid, a power generation device, an Energy Storage System (ESS), and a bidirectional Electric Vehicle (EV) charger includes: at least one processor; and a memory storing at least one instruction executed via the at least one processor. At least one instruction may include: an instruction for collecting basic information including information regarding a power generation state and a power consumption state, and grid electric power cost information; an instruction for establishing, by using the collected basic information, an ESS operation schedule for controlling charging and discharging operations of an ESS battery and an EV operation schedule for controlling charging and discharging operations of an EV battery; and an instruction for controlling the ESS battery and the EV battery to be charged/discharged in accordance with the ESS operation schedule and the EV operation schedule.

[Figure 3]

## EP 4 557 569 A1

**Description**

[Technical Field]

This application claims priority to and the benefit of Korean Patent Application No. 10-2023-0101159 filed in the Korean Intellectual Property Office on August 2, 2023, the entire contents of which are incorporated herein by reference.

The present invention relates to an energy management device and an energy management method, and more particularly to an energy management device that interworks with an electric power grid, a power generation device, an energy storage system, and a bidirectional electric vehicle charger, and an energy management method by the energy management device.

[Background Art]

An Energy Storage System (ESS) uses a battery that stores energy in a form being operated while interworking with new and renewable energy and an electric power grid. In recent years, as smart grids and new and renewable energy have become more widespread and the efficiency and stability of electric power grids have been emphasized, energy storage systems are increasingly being demanded to control power supply and demand and improve power quality. Depending on the purpose of use, energy storage systems may vary in power output and capacity, and multiple battery systems may be interconnected to form a large capacity energy storage system.

Recently, ESSs that are linked with PhotoVoltaic (PV) systems and Electric Vehicle (EV) charging systems have been proposed. Herein, the higher-level control device of the PV and EV linked ESS is configured to appropriately distribute grid electric power supplied from the grid, power generated by the PV system, and stored power from the ESS to supply the distributed power to loads and EV chargers, and to store residual power in the battery system.

PV and EV-linked ESSs are operated by taking into account a variety of factors, including the amount of power generated of the PV system, the amount of power required of the load and EV chargers, and the state of charge of the batteries. However, the most important goal considered by the user of the ESS is minimization of power purchase costs, but conventional ESS operation methods are aimed at maximizing the amount of PV power generated, maximizing battery performance, or minimizing the amount of power used of the grid.

Therefore, an appropriate energy management technology is needed that enables optimal operation considering the amount of PV power generated, the amount of power requirement of the load and the EV charger, and the state of charge of the battery, while minimizing power purchase costs.

[Detailed Description of the Invention]

[Technical Problem]

An object of the present invention is to provide an energy management device that is capable of minimizing the cost of purchasing grid electric power.

Another object of the present invention is to provide an energy management method by the energy management device.

[Technical Solution]

An exemplary embodiment of the present invention provides an energy management device that interworks with an electric power grid, a power generation device, an Energy Storage System (ESS), and a bidirectional Electric Vehicle (EV) charger, the energy management device including: at least one processor; and a memory storing at least one instruction executed via the at least one processor.

Herein, at least one instruction may include: an instruction for collecting basic information including information regarding a power generation state and a power consumption state, and grid electric power cost information; an instruction for establishing, by using the collected basic information, an ESS operation schedule for controlling charging and discharging operations of an ESS battery and an EV operation schedule for controlling charging and discharging operations of an EV battery; and an instruction for controlling the ESS battery and the EV battery to be charged/discharged in accordance with the ESS operation schedule and the EV operation schedule.

The instruction for establishing the operation schedule may include an instruction for deriving the amount of charge and discharge of the ESS battery per time interval, and the amount of charge and discharge of the EV battery per time interval, which minimize costs of purchasing grid electric power.

The instruction for establishing the ESS operation schedule and the EV operation schedule may include an instruction for deriving, by using an objective function defined by the costs of purchasing the grid electric power, the amount of charge and discharge of the ESS battery per time interval and the amount of charge and discharge of the EV battery per time interval.

The objective function may include defined constraints including at least one of a first condition regarding a balance of power supply and power consumption, a second condition regarding a State Of Charge (SOC) based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery. Herein, the constraints may further include at least one of a sixth condition regarding an SOC according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

The instruction for collecting the basic information may include an instruction for collecting basic information including information regarding a power generation state and a power consumption state for a predefined first period. Herein, the instruction for establishing the ESS operation schedule and the EV operation schedule may include: an instruction for generating, by using the collected basic information, power generation predictive information and power consumption predictive information for a second period predefined as a period after the first period; and an instruction for generating an ESS operation schedule and an EV operation schedule for the second period based on the generated predictive information.

The instruction for collecting the basic information may include an instruction for receiving, from a user terminal, load schedule information, for an on-off controllable load, in which a time interval for operating a load in an on state or an off state is set. Herein, the instruction for establishing the ESS operation schedule and the EV operation schedule may include an instruction for generating the ESS operation schedule and the EV operation schedule based on the load schedule information.

The instruction for collecting the basic information may include an instruction for receiving, from a user terminal, EV schedule information, in which a time interval during which an EV is connected to a bidirectional EV charger is set. Herein, the instruction for establishing the ESS operation schedule and the EV operation schedule may include an instruction for generating the ESS operation schedule and the EV operation schedule based on the EV schedule information.

The instruction for controlling the ESS battery and the EV battery to be charged/discharged may include an instruction for providing the ESS operation schedule to a power conversion device interworking with the ESS battery and providing the EV operation schedule to the bidirectional EV charger to cause the ESS battery to be charged and discharged in accordance with the ESS operation schedule, and cause the EV battery to be charged and discharged in accordance with the EV operation schedule.

Another exemplary embodiment of the present invention provides an energy management method by an energy management device that interworks with an electric power grid, a power generation device, an Energy Storage System (ESS), and a bidirectional Electric Vehicle (EV) charger, the energy management method including: collecting basic information including information regarding a power generation state and a power consumption state, and grid electric power cost information; establishing, by using the collected basic information, an ESS operation schedule for controlling charging and discharging operations of an ESS battery and an EV operation schedule for controlling charging and discharging operations of an EV battery; and controlling the ESS battery and the EV battery to be charged/discharged in accordance with the ESS operation schedule and the EV operation schedule.

The establishing of the operation schedule may include deriving the amount of charge and discharge of the ESS battery per time interval, and the amount of charge and discharge of the EV battery per time interval, which minimize costs of purchasing grid electric power.

The establishing of the ESS operation schedule and the EV operation schedule may include deriving, by using an objective function defined by the costs of purchasing the grid electric power, the amount of charge and discharge of the ESS battery per time interval and the amount of charge and discharge of the EV battery per time interval.

The objective function may include defined constraints including at least one of a first condition regarding a balance of power supply and power consumption, a second condition regarding a State Of Charge (SOC) based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery. Herein, the constraints may further include at least one of a sixth condition regarding an SOC according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

The collecting of the basic information may include collecting basic information including information regarding a power generation state and a power consumption state for a predefined first period. Herein, the establishing of the ESS operation schedule and the EV operation schedule may include: generating, by using the collected basic information, power generation predictive information and power consumption predictive information for a second period predefined as a period after the first period; and generating an ESS operation schedule and an EV operation schedule for the second period based on the generated predictive information.

The collecting of the basic information may include receiving, from a user terminal, load schedule information, for an on-off controllable load, in which a time interval for operating a load in an on state or an off state is set. Herein, the establishing of the ESS operation schedule and the EV operation schedule may include generating the ESS operation schedule and the EV operation schedule based on the load schedule information.

The collecting of the basic information may include receiving, from a user terminal, EV schedule information, in which a time interval during which an EV is connected to a bidirectional EV charger is set. Herein, the establishing of the ESS operation schedule and the EV operation schedule may include generating the ESS operation schedule and the EV operation schedule based on the EV schedule information.

The controlling of the ESS battery and the EV battery to be charged/discharged may include providing the ESS operation schedule to a power conversion device interworking with the ESS battery and providing the EV operation schedule to the bidirectional EV charger to cause the ESS battery to be charged and discharged in accordance with the ESS operation schedule, and cause the EV battery to be charged and discharged in accordance with the EV operation schedule.

[Advantageous Effects]

According to the exemplary embodiment of the present invention, operating costs of PV and EV-linked ESS may be minimized by deriving an operation schedule for the ESS and the EV charger that may minimize grid electric power purchase costs, and controlling the ESS and the EV charger according to the derived operation schedule.

[Brief Description of Drawings]

FIG. 1 is a block diagram illustrating an energy storage system to which the present invention is applicable.
FIG. 2 is a diagram illustrating an example implementation of the energy storage system to which the present invention is applicable.
FIG. 3 is a flowchart of an energy management method according to an exemplary embodiment of the present invention.
FIG. 4 is a flowchart of an operation schedule establishing method according to an exemplary embodiment of the present invention.
FIG. 5 is a diagram illustrating an example screen of a user terminal for explaining EV schedule information according to the exemplary embodiment of the present invention.
FIG. 6 is a diagram illustrating an example screen of a user terminal for explaining load schedule information according to the exemplary embodiment of the present invention.
FIG. 7 is a block diagram illustrating an energy management device according to an exemplary embodiment of the present invention.

<Explanation of Reference Numerals and Symbols>

100: Grid
200: Load
300: Power generation device
400: EV charger
500: Energy storage system
600: Energy management device
700: User terminal

[Best Mode]

The present invention may have various modifications and exemplary embodiments and thus specific exemplary embodiments will be illustrated in the drawings and described. However, it is not intended to limit the present invention to the specific exemplary embodiments, and it will be appreciated that the present invention includes all modifications, equivalences, or substitutions included in the spirit and the technical scope of the present invention. Similar references are used for similar components throughout the description of each drawing.

Terms, such as first, second, A, and B, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.

It should be understood that when one constituent element referred to as being "coupled to" or "connected to" another constituent element, one constituent element can be directly coupled to or connected to the other constituent element, but intervening elements may also be present. In contrast, when one constituent element is "directly coupled to" or "directly connected to" another constituent element, it should be understood that there are no intervening element present.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in generally used dictionary shall be construed that they have meanings matching those in the context of a related art, and shall not be construed in ideal or excessively formal meanings unless they are clearly defined in the present application.

Some of the terms used in the present specification are defined below.

State of Charge (SOC) is a current state of charge of a battery expressed as a percentage (%), and State of Health (SOH) is a current state of degradation of a battery expressed as a percentage (%).

Power Limit indicates the limit of power that may be output, preset by a battery manufacturer based on the state of the battery or set according to the SOC. The power limit may be divided into charge power limit and discharge power limit depending on whether a battery is charging or discharging.

Hereinafter, an exemplary embodiment according to the present invention will be described in detail with reference to the accompanying drawings.

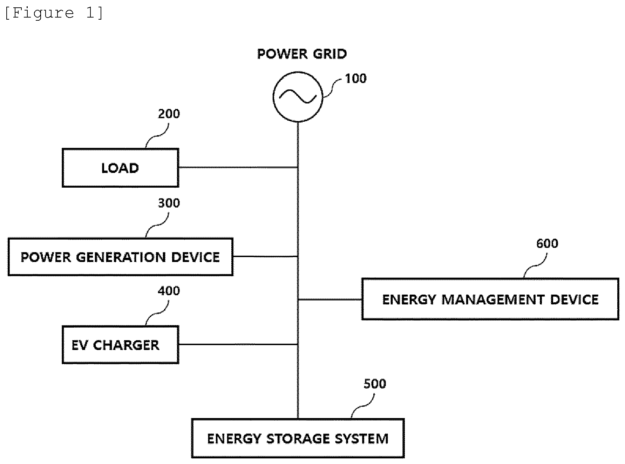

FIG. 1 is a block diagram illustrating an energy storage system to which the present invention is applicable.

An energy management device 600 may be linked with a grid 100, a load 200, a power generation device 300, an Electric Vehicle (EV) charger 400, and an energy storage system 500.

The energy storage system 500 may be electrically connected to the grid 100 and the power generation device 300, and may receive power from the grid 100 and the power generation device 300 and store the received power internally.

The energy storage system 500 may be electrically connected to the load 200 and the EV charger 400 to supply power stored in batteries (hereinafter, ESS batteries) configured in the energy storage system to the load 200 and the EV charger 400. Meanwhile, the load 200 may be electrically connected to the grid 100 and the power generation device 300 to receive power from the grid 100 and the power generation device 300.

The power generation device 300 is a device for generating power by using a power generation device, and may include at least one of photovoltaic, solar thermal, wind, and geothermal power generation devices. However, the type of power generation device 300 is not an essential component of the present invention, so that the scope of the present invention is not limited to these entities.

The EV charger 400 may be electrically connected to the grid 100, the power generation device 300, and the energy storage system 500, and may receive power from the grid 100, the power generation device 300, and the energy storage system 500.

In the exemplary embodiment, the EV charger 400 may correspond to a bi-directional EV charger. In this case, the EV charger 400 may charge a battery (hereinafter, the EV battery) included in the EV by using power supplied from an external source, and may discharge the power stored in the EV battery to an external source. In other words, in the state where the EV is connected to the EV charger 400, the bidirectional EV charger and the EV battery may function the same as the energy storage system 500 according to the present invention.

When the EV charger 400 is configured as a bidirectional charger, the EV charger 400 may supply internally stored power to the load 200 and the energy storage system 500.

The energy management device 600 may be configured to be networked with at least one of the load 200, the power generation device 300, the EV charger 400, and the energy storage system 500 to transceive data each other. The energy management device 600 may be included and configured inside the energy storage system 500, or may be separate and external to the energy storage system 500. For example, the energy management device 600 may be implemented while being included in a Home Energy Management System (HEMS), which is the top-level control system for a residential ESS, or may be implemented while being included in a server of an ESS management company and be connected with the HEMS via a network.

The energy management device 600 may collect at least one of an operation state of the energy storage system 500, a power generation state of the power generation device 300, and a power consumption state of the load 200, and may establish an operation schedule for optimal operation of the energy storage system 500 and the EV charger 400 by using the collected information. Herein, the energy management device 600 may establish an ESS operation schedule for control of the energy storage system 500 and an EV operation schedule for control of the EV charger 400 by using a predefined operation schedule generation algorithm.

The operation schedule may include a charge and discharge amount (or reference power amount) per time interval. Specifically, the ESS operation schedule may include a charge/discharge amount of the ESS battery per time interval, and the EV operation schedule may include a charge/discharge amount of the EV battery per time interval.

The energy management device 600 may transmit the established ESS operation schedule to the battery charge and discharge control device of the energy storage system 500, such that the ESS battery is charge and discharge controlled in accordance with the ESS operation schedule.

Further, the energy management device 600 may transmit the established EV operation schedule to the EV charger 400 to cause the EV battery to be charge and discharge controlled in accordance with the EV operation schedule.

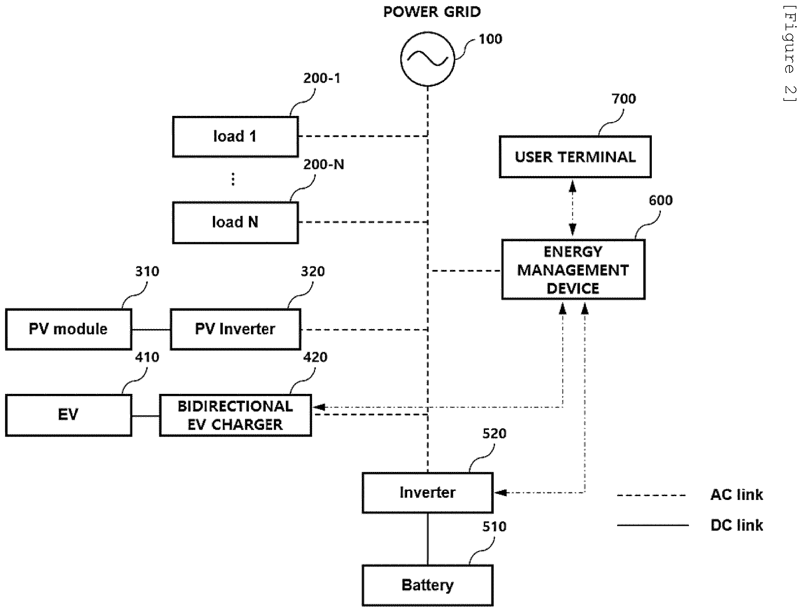

FIG. 2 is a diagram illustrating an example implementation of the energy storage system to which the present invention is applicable.

Referring to FIG. 2, the energy storage system 500 may include an ESS battery 510 that stores power, and an inverter 520 that controls the charging and discharging operation of the ESS battery 510.

The ESS battery 510 may typically be implemented in the form of a plurality of battery packs configuring a battery rack, and a plurality of battery racks configuring a battery bank. Herein, the battery pack may also be referred to as a battery module, depending on the device or system in which the battery is used.

Each battery may be equipped with a Battery Management System (BMS). The BMS may serve to monitor the current, voltage, and temperature of each battery rack (or pack) under its control, calculate a State Of Charge (SOC) based on the monitoring results, and control charging and discharging.

The inverter 520 is also referred to as a Power Conditioning System (PCS) or Power Conversion System (PCS), may control the power supplied to the battery from the outside and the power supplied by the battery to the outside.

The inverter 520 may include a Power Management System (PMS), and the energy management device 600 may be configured to interwork with the power management system of the inverter 520 to transceive data each other.

The load 200 may include a plurality of loads 200-1 to 200-N. Herein, at least some of the loads 200-1 to 200-N may be configured as first loads that are not controllable on and off, and the remaining some may be configured as second loads that are controllable on and off.

The first load may be a load that cannot be powered off, or that may have the supplied power that cannot be cut off by control of the energy management device. Alternatively, the second load may mean a load that may be powered off, or may have the supplied power that may be cut off, by control of the energy management device. Herein, the second load may be defined based on a selection signal input by the user.

The PV system may include a PV module 310 (for example, solar panels), a PV inverter 320, which is an AC/DC inverter, and may be configured with an AC terminals of the PV inverter 320 and an AC terminal of the inverter 520 of the energy storage system connected in an AC link.

The EV charger may correspond to a bidirectional EV charger 420. Herein, the bidirectional EV charger 420 may be configured to include an AC/DC inverter, and may have an AC terminal connected to the AC link.

The bidirectional EV charger 420 may control the charging and discharging operation of the EV battery included in the EV 410.

The energy management device 600, as a higher-level control device of the grid, the plurality of loads, the PV system, the bidirectional EV charger, and the energy storage system, and may be configured to collect state information of each of the configurations and, based on the collected state information, control operation of one or more of the loads, the PV system, the bidirectional EV charger, and the energy storage system.

The energy management device 600 may establish an operation schedule to minimize grid electric power purchase costs based on one or more of the amount of charge and discharge of the ESS battery, the amount of charge and discharge of the EV battery, the amount of power generated of the PV, and the amount of power consumption of the loads. Herein, the energy management device 600 may establish an ESS operation schedule for control of the energy storage system 500 and an EV operation schedule for control of the EV charger 400 by using a predefined objective function and constraint.

The energy management device 600 may be configured to be connected with the user terminal 700 over a network to transceive data each other.

The user terminal 700 may refer to a computing device used by an owner or administrator of the energy storage system, such as a personal computer (PC), mobile phone, or tablet PC.

The energy management device 600 may receive, from the user terminal 700, load schedule information for the second load. Herein, the load schedule information may include information regarding time intervals for each of the second loads to operate in an on state or off state, as set by the user.

The energy management device 600 may control the on-off of the second load based on the load schedule information received from the user terminal 700. For example, when load schedule information including [load 4, off at 14:00, on at 16:00] is received, the energy management device 600 may, at 14:00, power off the load 4, or otherwise shut off the power supply to the load 4. Subsequently, the energy management device 600 may, at 16:00, power on the load 4 or unblock the power supply to the load 4.

The energy management device 600 may receive, from the user terminal 700, EV schedule information for the EV 410. Herein, the EV schedule information may include information regarding a time interval, set by the user, during which the EV is connected to the bidirectional EV charger. For example, the energy management device 600 may receive EV schedule information that includes [EV access time, 17:00 to 19:00, 21:00 to 24:00] from the user terminal 700.

The load schedule information and the EV schedule information received from the user terminal 700 may be utilized as basic information in the process of establishing the ESS operation schedule and the EV operation schedule.

The energy management device 600 may transmit the established ESS operation schedule to the inverter 520 of the energy storage system 500, and the inverter 520 may control the charging and discharging operation of the ESS battery 510 in accordance with the ESS operation schedule. For example, the inverter 520 may receive an ESS operation schedule for a specific day from the energy management device 600 and control the charging and discharging operation of the ESS battery 510 based on reference power per time interval included in the ESS operation schedule.

The energy management device 600 may transmit the established EV operation schedule to the bidirectional EV charger 420, and the bidirectional EV charger 420 may control the charging and discharging operation of the EV battery in accordance with the EV operation schedule. For example, the bidirectional EV charger 420 may receive an EV operation schedule for a specific day from the energy management device 600, and may control the charging and discharging operations of the EV battery based on reference power per time interval included in the EV operation schedule.

The energy storage system illustrated in FIG. 2 is an AC coupled ESS, where the PV system, the bidirectional EV charger, the load, and the energy storage system are connected in an AC link. However, the present invention is also applicable to a DC coupled ESS in which the output terminal of the PV system, the input terminal of the EV charger, and the output terminal of the energy storage system are connected in a DC link, and the DC link is connected to one terminal of the AC/DC inverter.

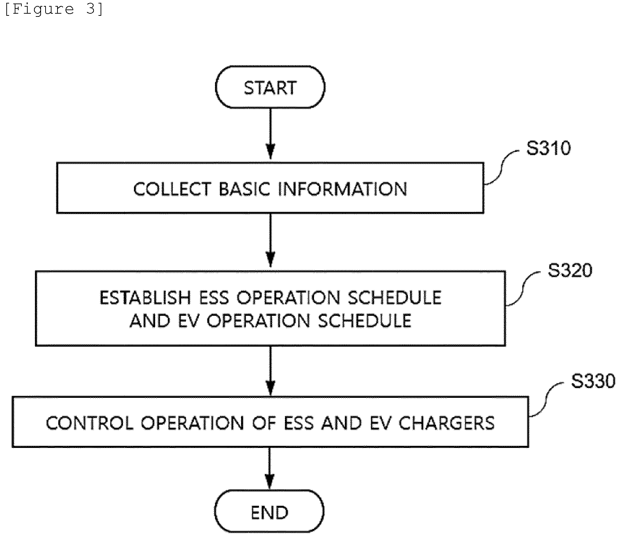

FIG. 3 is a flowchart of an energy management method according to an exemplary embodiment of the present invention.

The energy management method according to the exemplary embodiment of the present invention may be performed by an energy management device that interworks with an electric power grid, a power generation device, an energy storage system, and a bi-directional EV charger.

The energy management device may collect basic information for establishing an operation schedule (S310). Herein, the basic information may include information regarding power generation state and power consumption state, and grid electric power cost information.

Using the collected basic information, the energy management device may establish an ESS operation schedule for controlling the charging and discharging operations of the ESS battery and an EV operation schedule for controlling the charging and discharging operations of the EV battery (S320). Herein, the ESS operation schedule may include the amount of charge/discharge (or the amount of reference power) of the ESS battery per time interval, and the EV operation schedule may include the amount of charge/discharge (or the amount of reference power) of the EV battery per time interval.

In the operation schedule, time intervals may be defined in various ways as needed, for example, in the unit of 30 minutes, 15 minutes, or 1 minute. The operation schedule may include information about the duration of the operation, for example, the start time of the operation may be defined as 00:00 of a specific day and the end time of the operation may be defined as 24:00 of the corresponding day. The energy management device may, by using an optimization technique using an objective function, derive an ESS operation schedule and an EV operation schedule that minimizes the cost of purchasing the grid electric power.

The energy management device may control the ESS battery and the EV battery to be charged and discharged in accordance with the operation schedule established in operation S320 (S330).

Specifically, the energy management device may transmit the ESS operation schedule to the inverter of the energy storage system, and the inverter may control the charging and discharging operations of the ESS battery based on the amount of charge and discharge per time interval included in the ESS operation schedule. Further, the energy management device may transmit the EV operation schedule to the bi-directional EV charger, and the bi-directional EV charger may control the charging and discharging operations of the EV battery based on the amount of charge and discharge per time interval included in the EV operation schedule.

In the exemplary embodiment, the energy management device may adjust the operation schedule in the process in which the ESS battery and the EV battery operate in accordance with the operation schedule. Herein, the energy management device may adjust the operation schedule based on a difference value between a predictive value utilized in the process of establishing the operation schedule and an actual value collected during the operation process according to the operation schedule.

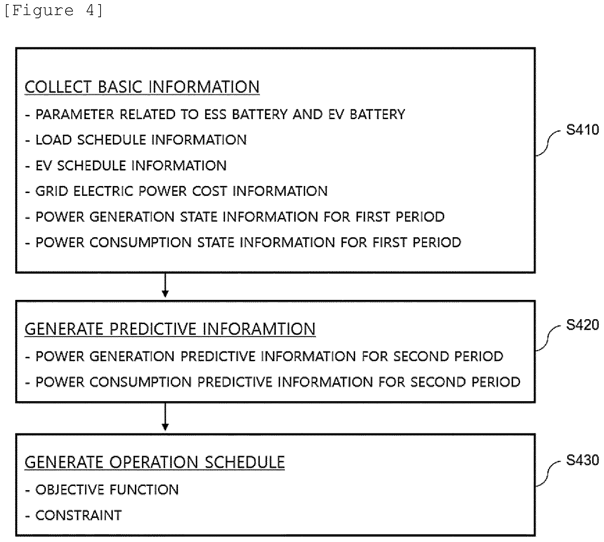

FIG. 4 is a flowchart of an operation schedule establishing method according to an exemplary embodiment of the present invention. In the following, a specific exemplary embodiment of steps S310 to S320 of FIG. 3 will be described in detail with reference to FIG. 4.

The energy management device collects basic information (S410).

The basic information may include ESS battery-related parameters, EV battery-related parameters, grid electric power cost information, and information regarding power generation state and power consumption state for a predefined first period. Herein, the basic information may further include load schedule information, EV schedule information.

The ESS battery-related parameters may include, for the ESS battery, one or more of a capacity, an upper limit value of the SOC, a lower limit value of the SOC, charge/discharge efficiency of the power conversion device, and a power limit of the power conversion device.

The EV battery-related parameters may include, for the EV battery, one or more of a capacity, charge/discharge efficiency, an upper limit value of the SOC, a lower limit value of the SOC, charge/discharge efficiency of the bidirectional EV charger, and a power limit of the bidirectional EV charger. Herein, the energy management device may receive information about one or more of the upper limit value of the SOC and the lower limit value of the SOC from the user terminal. For example, the user terminal may receive an input of a minimum guaranteed SOC of the EV battery from the user and transmit the input minimum guaranteed SOC to the energy management device. In this case, the energy management device may define the minimum guaranteed SOC received from the user terminal as a lower limit value of the SOC of the EV battery.

The grid electric power cost information may include the grid electric power cost per time interval.

The information regarding the power generation state and the power consumption state may include the amount of power generation of the power generation device per time interval and the amount of power consumption of the respective loads per the time interval.

The first period may be defined in various ranges, taking into account the accuracy of prediction of the predictive information, for example, from one year prior to a specific day ($n^{th}$ day) to one day ($n$-$1^{th}$ day) prior to the corresponding day ($n^{th}$ day).

The energy management device may generate predictive information for a second period, which is predefined as a period after the first period by using the collected basic information (S420).

The predictive information may include power generation predictive information and power consumption predictive information. Herein, the power generation predictive information may include the predictive amount of power generation of the power generation device per time interval, and the power consumption predictive information may include the predictive amount of power consumption of the load per time interval.

The second period may be defined as an operating period of the operation schedule, for example, from 00:00 to 24:00 of a specific day ($n^{th}$ day) .

In the exemplary embodiment, the energy management device may, based on the information regarding the power generation state and the power consumption state included in the basic information, derive pattern information including a power generation pattern and a power consumption pattern, and generate the power generation predictive information and the power consumption predictive information by using the derived pattern information. For example, the energy management device may calculate average values for the amount of power generation and the amount of power consumption per time interval over a one year period to derive the predictive amount of power generation and the predictive amount of power consumption per time interval for a specific day.

In another exemplary embodiment, the energy management device may generate the power generation predictive information and the power consumption predictive information by using an artificial intelligence-based predictive model. For example, the predictive model may be configured to be pre-trained with training data regarding a power generation state and a power consumption state, and output power generation predictive information and power consumption predictive information (for example, the predictive amount of power generation and the predictive amount of power consumption per time interval for a specific day) as output data when the basic information is input as input data.

The energy management device may generate an ESS operation schedule and an EV operation schedule for the second period based on the generated predictive information (S430). Herein, the energy management device may derive an ESS operation schedule and an EV operation schedule by using an objective function defined based on mixed-integer linear programming (MILP). In the following, a specific implementation example of the operation schedule generation method will be described in detail.

The energy management device may derive an ESS operation schedule including the amount of charge and discharge of the ESS battery per time interval and an EV operation schedule including the amount of charge and discharge of the EV battery per time interval by using an objective function defined as the cost of purchasing grid electric power. Herein, the objective function may be defined as represented in Equation 1 below.

[Equation 1]

$$\text{Minimize}\left(\sum_{t=1}^{t=24} P_{grid}(t) * \lambda_{grid}(t)\right)$$

(where $P_{grid}(t)$ is the grid electric power schedule and $\lambda_{grid}(t)$ is the grid electric power cost)

Equation 1 is an objective function for deriving the amount of charge and discharge of the ESS battery and the amount of charge and discharge of the EV battery per time interval that minimizes the grid electric power purchase cost.

Herein, the objective function according to Equation 1 may be subject to one or more constraints.

The constraints may include one or more of a first condition regarding a balance of power supply and power consumption, a second condition regarding a state of charge (SOC) based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery. Herein, the constraint may further include at least one of a sixth condition regarding a state of charge (SOC) according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

[Equation 2]

$$P_{grid}(t) - P_{Bat_{ch}}(t) + P_{Bat_{dch}}(t) - P_{EV_{ch}}(t) + P_{EV_{dch}}(t) = P_{load_p}(t) + P_{Pv_p}(t)$$

(where $P_{Bat_{ch}}(t)$ is the amount of charge power of the ESS battery, $P_{Bat_{dch}}(t)$ is the amount of discharge power of the ESS battery, $P_{EV_{ch}}(t)$ is the amount of charge power of the EV battery, $P_{EV_{dch}}(t)$ is the amount of discharge power of the EV battery, $P_{Pv_p}(t)$ is the predictive amount of power generation, and $P_{load_p}(t)$ is the amount of predictive power consumption)

[Equation 3]

$$SOC(t+1) = SOC(t) + \frac{\eta_{ch} * P_{Bat_{ch}}(t) - \frac{1}{\eta_{dch}} * P_{Bat_{dch}}(t)}{E_{cap}} * t_{step}$$

(where $SOC(t)$ is the SOC of the ESS battery, $E_{cap}$ is the capacity of the ESS battery, $\eta_{ch}$ is the charging efficiency of the power conversion device, $\eta_{dch}$ is the discharging efficiency of the power conversion device, and $t_{step}$ is the time interval)

[Equation 4]

$$SOC_{min} \le SOC(t) \le SOC_{max}$$

(where $SOC_{min}$ is the lower limit value of SOC of the ESS battery and $SOC_{max}$ is the upper limit value of SOC of the ESS battery)

[Equation 5]

$$P_{Bat_{ch}}(t) - \mu_{ch}(t) * P_{Inv\_max} \le 0$$

(where $\mu_{ch}$ is the battery state value for charging with a value of 0 or 1, and $P_{Inv\_max}$ is the maximum output of the power conversion device)

[Equation 6]

$$P_{Bat_{dch}}(t) - \mu_{dch}(t) * P_{Inv\_max} \leq 0$$

(where $\mu_{dch}$ is the battery state value for discharging with a value of 0 or 1)

[Equation 7]

$$\mu_{ch}(t) + \mu_{dch}(t) \leq 1$$

[Equation 8]

$$SOC_{EV}(t+1) = SOC_{EV}(t) + \frac{\eta_{ch\_EV} * P_{EV_{ch}}(t) - \frac{1}{\eta_{dch\_EV}} * P_{EV_{dch}}(t)}{E_{cap\_EV}} * t_{step}$$

(where $SOC_{EV}(t)$ is the SOC of the EV battery, $E_{cap\_EV}$ is the capacity of the EV battery, $\eta_{ch\_EV}$ is the charging efficiency of the bidirectional EV charger, $\eta_{dch\_EV}$ is the discharging efficiency of the bidirectional EV charger, $t_{step}$ is the time interval)

[Equation 9]

$$SOC_{EVmin} \leq SOC(t) \leq SOC_{EVmax}$$

(where $SOC_{EVmin}$ is the lower limit value of SOC of the EV battery and $SOC_{EVmax}$ is the upper limit value of SOC of the EV battery)

[Equation 10]

$$P_{BV_{ch}}(t) - \beta_{EV} * \mu_{EVch}(t) * P_{EV\_max} \leq 0$$

(where $\beta_{EV}$ is the EV connection state value with a value of 0 or 1, $\mu_{EVch}$ is the charge state value with a value of 0 or 1, and $P_{EV\_max}$ is the maximum output of the bidirectional EV charger)

[Equation 11]

$$P_{BV_{dch}}(t) - \beta_{EV} * \mu_{EVdch}(t) * P_{EV\_max} \leq 0$$

(where $\mu_{EVdch}$ is the discharge state value with a value of 0 or 1)

[Equation 12]

$$\mu_{EVch}(t) + \mu_{EVdch}(t) \leq 1$$

The first condition may be implemented as Equation 2, and functions to ensure that the decision variables $P_{grid}(t)$, $P_{Batch}(t)$, $P_{Batdch}(t)$, $P_{EVch}(t)$ , and $P_{EVdch}(t)$ are determined to balance the supply and demand of electric power.

The second condition may be implemented as Equation 3, and functions to determine that the SOC of the ESS battery in the next time interval is determined based on the capacity of the ESS battery and the charge and discharge efficiency of the power conversion device.

The third condition may be implemented as Equation 4, and functions to ensure that the SOC of the ESS battery is determined within a set threshold range.

The fourth and fifth conditions may be implemented as Equations 5 to 7, and function to ensure that the decision variables $P_{Batch}(t)$ and $P_{Batdch}(t)$ do not exceed the power limit of the power conversion device (for example, an inverter), and that the amount of charge power and the amount of discharge power cannot be determined simultaneously.

The sixth condition may be implemented as Equation 8 and functions to determine the SOC of the EV battery in the next time interval based on the capacity of the EV battery and the charge/discharge efficiency of the bidirectional EV charger.

The seventh condition may be implemented as Equation 9, and functions to ensure that the SOC of the EV battery is determined within a set threshold range. Herein, one or more of the lower limit value of SOC and the upper limit value of SOC of the EV battery may be set by the user. For example, the lower limit value of the SOC of the EV battery may be defined as a minimum guaranteed SOC of the EV battery received from the user terminal. According to the operation schedule derived from the objective function reflecting the seventh condition, the EV battery may perform a charge/-discharge operation at a state of the minimum guaranteed SOC or more.

The eighth and ninth conditions may be implemented as Equation 10 to 12, and function to ensure that the decision variables $P_{EV_{ch}}(t)$ and $P_{EV_{dch}}(t)$ do not exceed the power limit of the bidirectional EV charger, and that the amount of charge power and the amount of discharge power cannot be determined simultaneously.

The EV connection state value $\beta_{EV}$, reflected in Equations 10 and 11, may be defined as [1] in the connection state and [0] for the disconnection state. Herein, the EV connection state value may be defined based on the EV schedule information received from the user terminal.

On the other hand, when the plurality of loads includes one or more second loads (loads that may be controlled on and off), Equation 2 may be modified as represented in Equations 13 and 14 below.

[Equation 13]

$$P_{grid}(t) - P_{Bat_{ch}}(t) + P_{Bat_{dch}}(t) - P_{EV_{ch}}(t) + P_{EV_{dch}}(t)$$

$$= P_{load\_c_p}(t) + \sum_{n=1}^{n} P_{load\_n_p}(t) + P_{Pv_p}(t)$$

(where $P_{load\_c_p}(t)$ is the predictive amount of power consumption of the first load, and $P_{load\_n_p}(t)$ is the predictive amount of power consumption of the second load)

[Equation 14]

$$P_{load\_n_p}(t) = \begin{cases} P_{load\_n_p}(t), & if\ \beta_{load\_n} = 1 \\ 0, & if\ \beta_{load\_n} = 0 \end{cases}$$

(where $\beta_{load\_n}$ is an on-off state value of the load having a value of 0 or 1)

When the loads include the first load and the second load, in S420, the energy management device may generate the predictive amount of power consumption for the first load and the predictive amount of power consumption for the second load. Herein, the first condition regarding the balance of power supply and power consumption may reflect an on-off schedule of the second load, as represented in Equation 13.

The on-off state value $\beta_{load\_n}$ of the load reflected in Equation 14 may be defined as [1] for the on state and [0] for the off state. Herein, the on-off state value of the load may be defined based on the load schedule information received from the user terminal.

The energy management device may derive $P_{grid}(t)$, $P_{Bat_{ch}}(t)$, $P_{Bat_{dch}}(t)$, $P_{EV_{ch}}(t)$, and $P_{EV_{dch}}(t)$ satisfying the objective function and the constraints (the first condition to the ninth condition), and generate an ESS operation schedule including $P_{Bat_{ch}}(t)$ and $P_{Bat_{dch}}(t)$, and an EV operation schedule including $P_{EV_{ch}}(t)$ and $P_{EV_{dch}}(t)$. In the meantime, the objective function and the constraints for the operation schedule establishment may have various modified examples, and the rights of the present invention are not limited to Equations described above.

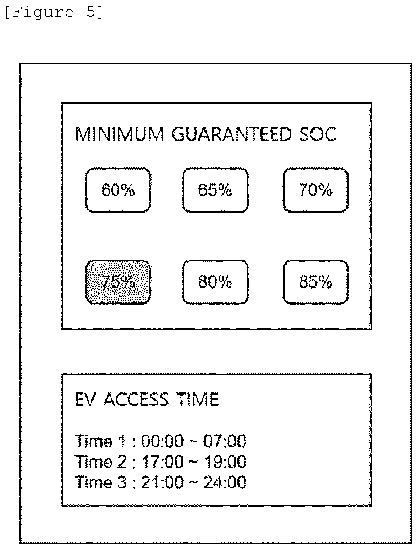

FIG. 5 is a diagram illustrating an example screen of a user terminal for explaining EV schedule information according to the exemplary embodiment of the present invention.

The energy management device may receive the minimum guaranteed SOC and the EV schedule information from the user terminal, and may generate an operation schedule based on the received minimum guaranteed SOC and EV schedule information.

More specifically, the user terminal may receive, via a predefined Graphical User Interface (GUI), input of the minimum guaranteed SOC and the EV schedule information for the EV battery from the user.

For example, as illustrated in FIG. 5, the user terminal may receive, from the user, a specific SOC value (75%) as a minimum guaranteed SOC and EV schedule information for time intervals (Time 1: 00:00 to 07:00, Time 2: 17:00 to 19:00, and Time 3: 21:00 to 24:00) during which the EV is connected to the bidirectional EV charger. Then, the user terminal may transmit the minimum guaranteed SOC and the EV schedule information input by the user to the energy management device.

The energy management device may reflect the minimum guaranteed SOC received from the user terminal in the seventh condition (Equation 9) among the constraints for deriving the operation schedule. Further, the energy management device may reflect the EV schedule information received from the user terminal in the eighth and ninth conditions (Equations 10 and 11) among the constraints for deriving the operation schedule.

The energy management device may derive $P_{grid}(t)$, $P_{Bat_{ch}}(t)$, $P_{Bat_{dch}}(t)$, $P_{EV_{ch}}(t)$, and $P_{EV_{dch}}(t)$ satisfying the objective function according to Equation 1 and the constraints (the first condition to the ninth condition) reflecting the information received from the user terminal, and generate an ESS operation schedule including $P_{Bat_{ch}}(t)$ and $P_{Bat_{dch}}(t)$, and an EV operation schedule including $P_{EV_{ch}}(t)$ and $P_{EV_{dch}}(t)$.

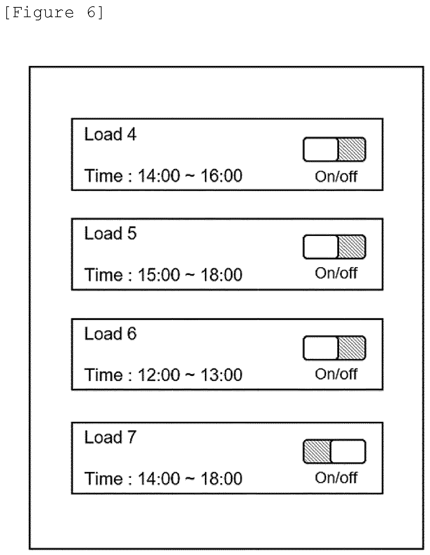

FIG. 6 is a diagram illustrating an example screen of a user terminal for explaining load schedule information according to the exemplary embodiment of the present invention.

The energy management device may receive, from a user terminal, load schedule information for an on-off controllable load, in which a time interval for operating the load in an on state or an off state is set, and generate an operation schedule based on the received load schedule information.

More specifically, the user terminal may receive, via a predefined GUI, load schedule information for the second load.

For example, as illustrated in FIG. 6, the user terminal may output a list of second loads (Loads 4, 5, 6, and 7) that are controllable on and off among a plurality of loads (Load 1 to Load N). The user terminal may then receive, from the user, information about the time interval during which each of the second loads operates in an on state or off state ([Load 4, 14:00 to 16:00, on], [Load 5, 15:00 to 18:00, on], [Load 6, 12:00 to 13:00, on], and [Load 7, 14:00 to 18:00, off]).

Then, the user terminal may transmit the load schedule information input by the user to the energy management device.

The energy management device may control the on-off state of the second load based on the load schedule information received from the user terminal. For example, the energy management device may switch the load 4 from an off state to an on state at 14:00 and switch the load 4 from an on state to an off state at 16:00. Further, the energy management device may switch the load 7 from an on state to an off state at 14:00 and switch the load 7 from an off state to an on state at 18:00.

The energy management device may reflect the load schedule information received from the user terminal in the first condition (Equations 13 and 14) among the constraints for deriving the operation schedule.

The energy management device may derive $P_{grid}(t)$, $P_{Bat_{ch}}(t)$, $P_{Bat_{dch}}(t)$, $P_{EV_{ch}}(t)$, and $P_{EV_{dch}}(t)$ satisfying the objective function according to Equation 1 and the constraints (the first condition to the ninth condition) reflecting the information received from the user terminal, and generate an ESS operation schedule including $P_{Bat_{ch}}(t)$ and $P_{Bat_{dch}}(t)$, and an EV operation schedule including $P_{EV_{ch}}(t)$ and $P_{EV_{dch}}(t)$.

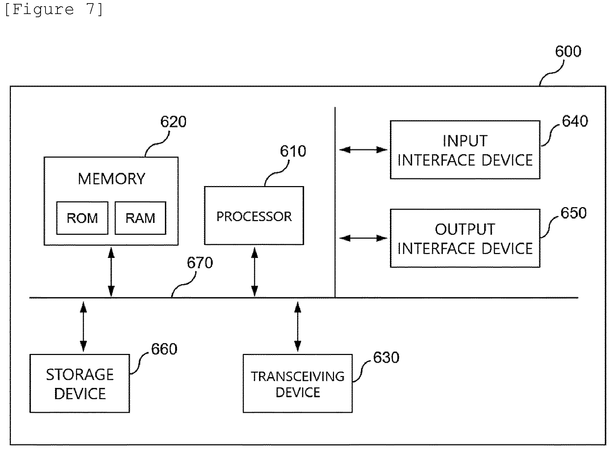

FIG. 7 is a block diagram illustrating an energy management device according to an exemplary embodiment of the present invention.

The energy management device 600 according to the exemplary embodiment of the present invention may be configured while being included within the energy storage system, or may be separate and external to the energy storage system. For example, the energy management device 600 may be implemented while being included in the HEMS, which is the top-level control system of the residential ESS, or may be implemented while being included in a server of an ESS management company and configured to be connected with the HEMS via a network.

The energy management device 600 may include at least one processor 610, a memory 620 storing at least one instruction executed via the processor, and a transceiving device 630 performing communication via network connection.

The at least one instruction may include: an instruction for collecting basic information including information regarding a power generation state and a power consumption state, and grid electric power cost information; an instruction for establishing, by using the collected basic information, an ESS operation schedule for controlling the charging and discharging operations of the ESS battery and an EV operation schedule for controlling the charging and discharging operations of the EV battery; and an instruction for controlling the ESS battery and the EV battery to be charged/discharged in accordance with the ESS operation schedule and the EV operation schedule.

The instruction for establishing the operation schedule may include an instruction for deriving the amount of charge and discharge of the ESS battery per time interval, and the amount of charge and discharge of the EV battery per time interval, which minimize the cost of purchasing grid electric power.

The instruction for establishing the ESS operation schedule and the EV operation schedule may include an instruction for deriving, by using an objective function defined by the cost of purchasing grid electric power, the amount of charge and discharge of the ESS battery per time interval and the amount of charge and discharge of the EV battery per time interval.

The objective function may include defined constraints including at least one of a first condition regarding a balance of power supply and power consumption, a second condition regarding a state of charge (SOC) based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery. Herein, the constraint may further include at least one of a sixth condition regarding a state of charge (SOC) according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

The instruction for collecting the basic information may include an instruction for collecting basic information including information regarding a power generation state and a power consumption state for a predefined first period. Herein, the instruction for establishing the ESS operation schedule and the EV operation schedule may include: an instruction for generating, by using the collected basic information, power generation predictive information and power consumption predictive information for a second period predefined as a period after the first period; and an instruction for generating an ESS operation schedule and an EV operation schedule for the second period based on the generated predictive information.

The instruction for collecting the basic information may include an instruction for receiving, from the user terminal, load schedule information, for an on-off controllable load, in which a time interval for operating a load in an on state or an off state is set. Herein, the instruction for establishing the ESS operation schedule and the EV operation schedule may include an instruction for generating the ESS operation schedule and the EV operation schedule based on the load schedule information.

The instruction for collecting the basic information may include an instruction for receiving, from the user terminal, EV schedule information, in which a time interval during which the EV is connected to the bidirectional EV charger is set. Herein, the instruction for establishing the ESS operation schedule and the EV operation schedule may include an instruction for generating the ESS operation schedule and the EV operation schedule based on the EV schedule information.

The instruction for controlling the ESS battery and the EV battery to be charged/discharged may include an instruction for providing the ESS operation schedule to a power conversion device interworking with the ESS battery and providing the EV operation schedule to the bidirectional EV charger, to cause the ESS battery to be charged and discharged in accordance with the ESS operation schedule, and cause the EV battery to be charged and discharged in accordance with the EV operation schedule.

The energy management device 600 may further include an input interface device 640, an output interface device 650, a storage device 660, and the like. Each of the components included in the energy management device 600 may be connected by a bus 670 to communicate with each other.

Herein, the processor 610 may refer to a Central Processing Unit (CPU), a Graphics Processing Unit (GPU), or a dedicated processor on which the methods according to the exemplary embodiments of the present invention are performed. The memory (or storage device) may be formed of at least one of a volatile storage medium and a non-volatile storage medium. For example, the memory may be formed of at least one of Read Only Memory (ROM) and Random Access Memory (RAM).

The operation of the method according to the exemplary embodiment of the present invention may be implemented as a computer-readable program or code on a computer-readable recording medium. The computer-readable recording medium includes all types of recording devices in which data readable by a computer system is stored. In addition, the computer-readable recording medium may be distributed in a networkconnected computer system to store and execute computer-readable programs or codes in a distributed manner.

Although some aspects of the invention have been described in the context of the device, it may also represent a description according to a corresponding method, wherein a block or device corresponds to a method step or feature of a method step. Similarly, aspects described in the context of a method may also represent a feature of a corresponding block or item or a corresponding device. Some or all of the method steps may be performed by (or using) a hardware device, such as, for example, a microprocessor, a programmable computer, or an electronic circuit. In some exemplary embodiments, one or more of the most important method steps may be performed by such a device.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. An energy management device that interworks with an electric power grid, a power generation device, an Energy Storage System ESS, and a bidirectional Electric Vehicle EV charger, the energy management device comprising:

at least one processor; and
a memory for storing at least one instruction executed via the at least one processor,
wherein the at least one instruction includes:

an instruction for collecting basic information including information regarding a power generation state and a power consumption state, and grid electric power cost information;
an instruction for establishing, by using the collected basic information, an ESS operation schedule for controlling charging and discharging operations of an ESS battery and an EV operation schedule for controlling charging and discharging operations of an EV battery; and
an instruction for controlling the ESS battery and the EV battery to be charged/discharged in accordance with the ESS operation schedule and the EV operation schedule.

2. The energy management device of claim 1, wherein the instruction for establishing the ESS operation schedule and the EV operation schedule includes an instruction for deriving the amount of charge and discharge of the ESS battery per time interval, and the amount of charge and discharge of the EV battery per time interval, which minimize costs of purchasing grid electric power.

3. The energy management device of claim 1, wherein the instruction for establishing the ESS operation schedule and the EV operation schedule includes an instruction for deriving, by using an objective function defined by the costs of purchasing the grid electric power, the amount of charge and discharge of the ESS battery per time interval and the amount of charge and discharge of the EV battery per time interval.

4. The energy management device of claim 3, wherein the objective function includes defined constraints including at least one of a first condition regarding a balance of power supply and power consumption, a second condition regarding a State Of Charge SOC based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery.

5. The energy management device of claim 4, wherein the constraints further include at least one of a sixth condition regarding an SOC according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

6. The energy management device of claim 1, wherein the instruction for collecting the basic information includes an instruction for collecting basic information including information regarding a power generation state and a power consumption state for a predefined first period, and
the instruction for establishing the ESS operation schedule and the EV operation schedule includes:

an instruction for generating, by using the collected basic information, power generation predictive information and power consumption predictive information for a second period predefined as a period after the first period; and
an instruction for generating an ESS operation schedule and an EV operation schedule for the second period based on the generated predictive information.

7. The energy management device of claim 1, wherein the instruction for collecting the basic information includes an instruction for receiving, from a user terminal, load schedule information, for an on-off controllable load, in which a time interval for operating a load in an on state or an off state is set, and
the instruction for establishing the ESS operation schedule and the EV operation schedule includes an instruction for generating the ESS operation schedule and the EV operation schedule based on the load schedule information.

8. The energy management device of claim 1, wherein the instruction for collecting the basic information includes an instruction for receiving, from a user terminal, EV schedule information, in which a time interval during which an EV is connected to a bidirectional EV charger is set, and
the instruction for establishing the ESS operation schedule and the EV operation schedule includes an instruction for generating the ESS operation schedule and the EV operation schedule based on the EV schedule information.

9. The energy management device of claim 1, wherein the instruction for controlling the ESS battery and the EV battery to be charged/discharged includes an instruction for providing the ESS operation schedule to a power conversion device interworking with the ESS battery and providing the EV operation schedule to the bidirectional EV charger to cause the ESS battery to be charged and discharged in accordance with the ESS operation schedule, and cause the EV battery to be charged and discharged in accordance with the EV operation schedule.

10. An energy management method by an energy management device that interworks with an electric power grid, a power generation device, an Energy Storage System ESS, and a bidirectional Electric Vehicle EV charger, the energy management method comprising:

collecting basic information including information regarding a power generation state and a power consumption state, and grid electric power cost information;

establishing, by using the collected basic information, an ESS operation schedule for controlling charging and discharging operations of an ESS battery and an EV operation schedule for controlling charging and discharging operations of an EV battery; and

controlling the ESS battery and the EV battery to be charged/discharged in accordance with the ESS operation schedule and the EV operation schedule.

11. The energy management method of claim 10, wherein the establishing of the ESS operation schedule and the EV operation schedule includes deriving the amount of charge and discharge of the ESS battery per time interval, and the amount of charge and discharge of the EV battery per time interval, which minimize costs of purchasing grid electric power.

12. The energy management method of claim 10, wherein the establishing of the ESS operation schedule and the EV operation schedule includes deriving, by using an objective function defined by the costs of purchasing the grid electric power, the amount of charge and discharge of the ESS battery per time interval and the amount of charge and discharge of the EV battery per time interval.

13. The energy management method of claim 12, wherein the objective function includes defined constraints including at least one of a first condition regarding a balance of power supply and power consumption, a second condition regarding a State Of Charge SOC based on charge/discharge efficiency of the ESS battery, a third condition regarding the amount of limit charge of the ESS battery, a fourth condition regarding a limit output of the power conversion device, and a fifth condition regarding a binarization of the charge/discharge state of the ESS battery.

14. The energy management method of claim 13, wherein the constraints further include at least one of a sixth condition regarding an SOC according to charge/discharge efficiency of the EV battery, a seventh condition regarding the amount of limit charge of the EV battery, an eighth condition regarding a limit output of the bidirectional EV charger, and a ninth condition regarding a binarization of the charge/discharge state of the bidirectional EV charger.

15. The energy management method of claim 10, wherein the collecting of the basic information includes collecting basic information including information regarding a power generation state and a power consumption state for a predefined first period, and

the establishing of the ESS operation schedule and the EV operation schedule includes:

generating, by using the collected basic information, power generation predictive information and power consumption predictive information for a second period predefined as a period after the first period; and

generating an ESS operation schedule and an EV operation schedule for the second period based on the generated predictive information.

16. The energy management method of claim 10, wherein the collecting of the basic information includes receiving, from a user terminal, load schedule information, for an on-off controllable load, in which a time interval for operating a load in an on state or an off state is set, and

the establishing of the ESS operation schedule and the EV operation schedule includes generating the ESS operation schedule and the EV operation schedule based on the load schedule information.

17. The energy management method of claim 10, wherein the collecting of the basic information includes receiving, from a user terminal, EV schedule information, in which a time interval during which an EV is connected to a bidirectional EV charger is set, and

the establishing of the ESS operation schedule and the EV operation schedule includes generating the ESS operation schedule and the EV operation schedule based on the EV schedule information.

18. The energy management method of claim 10, wherein the controlling of the ESS battery and the EV battery to be charged/discharged includes providing the ESS operation schedule to a power conversion device interworking with the ESS battery and providing the EV operation schedule to the bidirectional EV charger to cause the ESS battery to be charged and discharged in accordance with the ESS operation schedule, and cause the EV battery to be charged and discharged in accordance with the EV operation schedule.

[Figure 1]

[Figure 2]

[Figure 3]

[Figure 4]

COLLECT BASIC INFORMATION

- PARAMETER RELATED TO ESS BATTERY AND EV BATTERY
- LOAD SCHEDULE INFORMATION
- EV SCHEDULE INFORMATION
- GRID ELECTRIC POWER COST INFORMATION
- POWER GENERATION STATE INFORMATION FOR FIRST PERIOD
- POWER CONSUMPTION STATE INFORMATION FOR FIRST PERIOD

S410

GENERATE PREDICTIVE INFORAMTION

- POWER GENERATION PREDICTIVE INFORMATION FOR SECOND PERIOD
- POWER CONSUMPTION PREDICTIVE INFORMATION FOR SECOND PERIOD

S420

GENERATE OPERATION SCHEDULE

- OBJECTIVE FUNCTION
- CONSTRAINT

S430

[Figure 5]

MINIMUM GUARANTEED SOC

60%    65%    70%

75%    80%    85%

EV ACCESS TIME

Time 1 : 00:00 ~ 07:00
Time 2 : 17:00 ~ 19:00
Time 3 : 21:00 ~ 24:00

[Figure 6]

[Figure 7]

600

620

**MEMORY**

| ROM | RAM |

610

**PROCESSOR**

640

**INPUT INTERFACE DEVICE**

650

**OUTPUT INTERFACE DEVICE**

670

660

**STORAGE DEVICE**

630

**TRANSCEIVING DEVICE**

## INTERNATIONAL SEARCH REPORT

| International application No. |
|---|
| **PCT/KR2024/010808** |

### A. CLASSIFICATION OF SUBJECT MATTER

**H02J 7/00**(2006.01)i; **H02J 3/00**(2006.01)i; **H02J 3/32**(2006.01)i; **H02J 3/38**(2006.01)i; **B60L 53/53**(2019.01)i; **B60L 55/00**(2019.01)i

According to International Patent Classification (IPC) or to both national classification and IPC

### B. FIELDS SEARCHED

Minimum documentation searched (classification system followed by classification symbols)

H02J 7/00(2006.01); B60L 50/53(2019.01); B60L 53/24(2019.01); B60L 53/60(2019.01); B60L 58/22(2019.01); G06F 1/26(2006.01); G06Q 20/14(2012.01); G06Q 50/06(2012.01); H02J 3/32(2006.01); H02J 3/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에너지 저장 시스템(Energy Storage System, ESS), 전기자동차(electric vehicle, EV), 비용(cost), 스케줄(schedule)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0082313 A (PMGROW CORPORATION) 08 June 2023 (2023-06-08)<br>See paragraphs [0049]-[0113], claims 1-9, and figures 3-5. | 1-18 |
| Y | KR 10-2019-0000038 A (KOREA ELECTROTECHNOLOGY RESEARCH INSTITUTE) 02 January 2019 (2019-01-02)<br>See paragraphs [0049]-[0123], claims 1-14, and figures 2-8. | 1-18 |
| A | WO 2022-241267 A1 (VELOCE ENERGY, INC.) 17 November 2022 (2022-11-17)<br>See paragraphs [0035]-[0064], and figures 1-2. | 1-18 |
| A | KR 10-2022-0155114 A (FOUNDATION FOR RESEARCH AND BUSINESS, SEOUL NATIONAL UNIVERSITY OF SCIENCE AND TECHNOLOGY) 22 November 2022 (2022-11-22)<br>See paragraphs [0078]-[0086], and figure 2. | 1-18 |
| A | KR 10-2022-0074102 A (KOREA INSTITUTE OF ENERGY RESEARCH) 03 June 2022 (2022-06-03)<br>See paragraphs [0084]-[0123], and figures 4-6. | 1-18 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **01 November 2024** | **01 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010808**

| Patent document cited in search report | | | Publication date (day/month/year) | Patent family member(s) | | | Publication date (day/month/year) |
|---|---|---|---|---|---|---|---|
| KR | 10-2023-0082313 | A | 08 June 2023 | KR | 10-2639174 | B1 | 21 February 2024 |
| KR | 10-2019-0000038 | A | 02 January 2019 | None | | | |
| WO | 2022-241267 | A1 | 17 November 2022 | AU | 2023-273313 | A1 | 30 November 2023 |
| | | | | BR | 112023023590 | A2 | 12 March 2024 |
| | | | | CA | 3218091 | A1 | 17 November 2022 |
| | | | | EP | 4337491 | A1 | 20 March 2024 |
| | | | | JP | 2024-518404 | A | 01 May 2024 |
| | | | | KR | 10-2024-0017357 | A | 07 February 2024 |
| | | | | MX | 2023013506 | A | 08 February 2024 |
| | | | | US | 2024-0222971 | A1 | 04 July 2024 |
| KR | 10-2022-0155114 | A | 22 November 2022 | KR | 10-2553039 | B1 | 06 July 2023 |
| KR | 10-2022-0074102 | A | 03 June 2022 | KR | 10-2469243 | B1 | 23 November 2022 |

Form PCT/ISA/210 (patent family annex) (July 2022)

**EP 4 557 569 A1**